# EUROPÄISCHE PATENTSCHRIFT

(11) **EP 3 281 836 B1**
(45) Veröffentlichungstag und Bekanntmachung des Hinweises auf die Patenterteilung: **08.04.2020**
(21) Anmeldenummer: 17181120.1
(22) Anmeldetag: 13.07.2017
(51) Int. Cl.: B61D 17/04

(54) **HOHLKAMMERPROFIL FÜR EINE WAGENKASTENSTRUKTUR EINES SCHIENENFAHRZEUGS SOWIE SCHIENENFAHRZEUG**
HOLLOW CHAMBER PROFILE FOR A STRUCTURAL BODY OF RAILWAY CAR AND RAILWAY VEHICLE
PROFILÉ DE CHAMBRE CREUSE POUR UNE STRUCTURE DE CARROSSERIE D'UN VÉHICULE SUR RAILS ET VÉHICULE SUR RAILS

(30) Priorität: 02.08.2016 DE 102016114241
(43) Veröffentlichungstag der Anmeldung: 14.02.2018
(73) Patentinhaber: Bombardier Transportation GmbH, 10785 Berlin (DE)
(72) Erfinder: Krakowsky, Gottfried, 02827 Görlitz (DE); Schaar, Jürgen, 02827 Görlitz (DE); Reisert, Bernd, 02625 Bautzen (DE)
(74) Vertreter: Cohausz & Florack

(56) Entgegenhaltungen:
- EP-A1- 0 622 285
- CN-U- 205 010 236
- DE-A1- 4 301 763
- DE-A1-102012 214 153

## Beschreibung

Die vorliegende Erfindung betrifft ein Schienenfahrzeug mit einer Wagenkastenstruktur und einer Türöffnung, wobei die Wagenkastenstruktur als tragendes Bestandteil mindestens ein Hohlkammerprofil aufweist, mit einer ersten sich in einer Längsrichtung des Hohlkammerprofils erstreckenden, quer zur Längsrichtung geschlossenen Profilkammer und mit mindestens einer zweiten sich in Längsrichtung des Hohlkammerprofils erstreckenden, quer zur Längsrichtung geschlossenen Profilkammer, wobei die mindestens eine zweite Profilkammer von einem quer zur Längsrichtung geschlossenen Extrusionsprofil gebildet wird.

Ein wie zuvor definiertes Hohlkammerprofil ist beispielsweise bekannt aus der GB 966,880 A.

Bei einem Hohlkammerprofil handelt es sich im Sinne der Erfindung um ein sich in eine Längsrichtung erstreckendes Profil mit mehreren Profilkammern. Ein solches Hohlkammerprofil wird auch als Mehrkammerprofil bezeichnet. Neben Mehrkammerprofilen sind auch Profile mit nur einer einzelnen Profilkammer, sogenannte Hohlprofile, bekannt.

Hohlkammerprofile und Hohlprofile werden im Schienenfahrzeugbau zur Verstärkung der Wagenkastenstruktur eingesetzt. Ein Beispiel für eine Wagenkastenstruktur mit einer seitlichen Verstärkung durch Hohlkammerprofile ist beispielsweise aus der US 4,800,820 bekannt. Bei dem zur Verstärkung dienenden Profil handelt es sich hier um ein Hohlprofil mit nur einer Profilkammer, wobei das Hohlprofil entweder durch Verschweißen eines offenen extrudierten Profils mit einem Blech oder durch ein geschlossenes extrudiertes Profil gebildet wird. "Offen" meint im Sinner der Erfindung, dass das Profil quer zu seiner Verlaufsrichtung (Längsrichtung bzw. Extrusionsrichtung) eine sich über die gesamte Profillänge erstreckende Öffnung bzw. Unterbrechung aufweist. Ein offenes Profil ist beispielsweise ein C-Profil oder U-Profil. "Geschlossen" meint im Sinne der Erfindung, dass das Profil quer zur Längsrichtung geschlossen ist, also über seine gesamte Länge oder abschnittsweise keine seitliche Unterbrechung aufweist. Ein solches Profil ist beispielsweise ein O-Profil.

Bei den vorgenannten Profilen besteht das Gesamtprofil zumindest abschnittsweise immer aus einem Strangpressprofil. Es sind aber auch Hohlprofile und Hohlkammerprofile bekannt, die ausschließlich aus miteinander verschweißten Blechen oder Blechformteilen bestehen. Die Bleche bzw. Blechformteile sind aus einem Flachbandmaterial gefertigt und jeweils an einer oder mehreren Stellen umgebogen. Zwei durch Umbiegen hergestellte Profile aus Blech werden dann der Länge nach miteinander verschweißt. Auf diese Weise wird entweder ein Hohlprofil, wie dies beispielsweise in der EP 1 950 002 B1 beschrieben ist, oder ein Hohlkammerprofil erzeugt, wie dies beispielsweise in der EP 1 820 753 A1 beschrieben ist.

Hohlkammerprofile und Hohlprofile, die ausschließlich aus miteinander verschweißten Blechformteilen bestehen, haben unter anderem den Nachteil, dass eine relativ hohe Anzahl an Schweißnähten oder -punkten vorgesehen werden muss, um eine ausreichende Stabilität zu erreichen. Dadurch bedingt kommt es auch zu einem relativ großen Bauteilverzug. Aus diesem Grund werden daher Strangpressprofile bevorzugt. Da diese aber herstellungsbedingt in ihrem Querschnitt (Querschnittsfläche quer zur Längsrichtung) begrenzt sind, ist es auch bekannt, ein Strangpressprofil mit einem Blechprofil (Blechformteil) zu verschweißen, um dadurch größere Querschnitte realisieren zu können. Letzteres ist beispielsweise aus der eingangs genannten GB 966 880 A bekannt.

Das aus der GB 966 880 bekannte Hohlkammerprofil ist Bestandteil einer Schwimmbrücke und weist quer zur Längsrichtung zu beiden Seiten ein Strangpressprofil auf, auf dem der Brückenteil gelagert ist. Zwischen den beiden Strangpressprofilen sind Bleche, teilweise in Form von Blechformteilen und teilweise in Form von ebenen Blechen, zu einem Fachwerk innerhalb des Profilmittelteils angeordnet, die mit den Strangpressprofilen verschweißt sind. Auf diese Weise wird eine Konstruktion mit einer Vielzahl von gleichmäßig geformten Profilkammern gebildet. Dies hat den Vorteil, dass Kräfte in der Gesamtkonstruktion möglichst gleichmäßig verteilt werden und eine Durchbiegung bei Belastung des Brückenteils vermieden wird.

Weitere Hohlkammerprofile für Schienenfahrzeuge sind aus der EP 0 622 285 A1, der DE 10 2012 214153 A1 und der DE 43 01 763 A1 bekannt.

Die Vielzahl von gleichmäßig geformten Profilkammern erfordert eine entsprechend hohe Anzahl an Blechformteilen und Schweißnähten. Ein solches Hohlkammerprofil ist daher relativ aufwendig in der Herstellung.

Es ist daher eine Aufgabe der vorliegenden Erfindung, ein Schienenfahrzeug mit einer Wagenkastenstruktur und einer Türöffnung, wobei die Wagenkastenstruktur als tragendes Bestandteil mindestens ein Hohlkammerprofil aufweist, anzugeben, womit die Herstellung vereinfacht wird und dennoch eine ausreichend hohe Stabilität einer Wagenkastenstruktur langfristig gewährleistet ist.

Die zuvor hergeleitete und aufgezeigte Aufgabe wird durch ein Schienenfahrzeug mit den Merkmalen des Anspruchs 1 gelöst.

Mit "quer zur Längsrichtung geschlossen" ist in der Beschreibung und den Ansprüchen gemeint, dass das Profil über seine gesamte Länge (Erstreckung in Längsrichtung, d.h. in Extrusionsrichtung) oder zumindest in einem oder mehreren in Längsrichtung verlaufenden Abschnitten keine seitlichen Unterbrechungen/Durchbrechungen, sondern eine umfänglich durchgehende Kontur aufweist. Die mindestens eine zweite Profilkammer ist dabei insbesondere durch einen sich in Längsrichtung erstreckenden, das heißt einen parallel zur ersten und zweiten Profilkammer verlaufenden Steg von der ersten Profilkammer getrennt, vorzugsweise vollständig getrennt. Im Sinne der Erfindung wird unter einem "Steg" immer eine Trennwand zwischen benachbarten Profilkammern verstanden.

Das erfindungsgemäße Schienenfahrzeug hat mehrere Vorteile. Zunächst ist erkannt worden, dass ein Hohlkammerprofil für den Einsatz als tragender Bestandteil eines Wagenkastens eines Schienenfahrzeugs aufgrund der unterschiedlichen Beanspruchung grundsätzlich einfacher aufgebaut sein kann als ein Hohlkammerprofil für den Einsatz als überbrückender Bestandteil einer Schwimmbrücke. Üblicherweise wird ein Hohlkammerprofil so in eine Wagenkastenstruktur, beispielsweise die Seiten der Wagenkastenstruktur, integriert, dass es über seine ganze Breite (Dimension quer zur Längsrichtung) an der übrigen Wagenkastenstruktur befestigt ist. Dadurch ist im montierten Zustand jeweils zumindest eine Profilkammerwand mehrerer Profilkammern, vorzugsweise aller Profilkammern, mit einem anderen tragenden Bestandteil der Wagenkastenstruktur verbunden. Die jeweiligen Profilkammerwände liegen vollständig oder über mehrere Stellen an dem anderen tragenden Bestandteil an. Dadurch tritt, ganz anders als bei dem überbrückenden Bestandteil einer Schwimmbrücke, keine nennenswerte Biegebeanspruchung um eine in Längsrichtung verlaufende Achse auf. Dadurch kann auf ein Fachwerk mit einer Vielzahl von Stegen, wie es bei der Schwimmbrücke vorgesehen ist, verzichtet werden.

Erfindungsgemäß weist das Hohlkammerprofil also insgesamt eine geringere Anzahl an Stegen auf, ist aber dennoch ausreichend stabil für den speziellen Anwendungszweck. Insbesondere reichen ein oder maximal zwei Stege in dem erfindungsgemäßen Hohlkammerprofil aus, um die gewünschte Stabilität zu gewährleisten, wenn die Stege Bestandteil des jeweiligen Extrusionsprofils sind, das heißt mit diesem coextrudiert wurden. In diesem Fall ist das Hohlkammerprofil frei von separat hergestellten und an das jeweilige Extrusionsprofil angeschweißten Stegen, insbesondere frei von Stegen aus Blech. Die Anzahl an separat herzustellenden und anzuschweißenden Elementen, insbesondere Blechen, wird so auf ein Minimum reduziert, was die Herstellung vereinfacht.

Eine ausreichend hohe Stabilität wird erfindungsgemäß dadurch gewährleistet, dass als ein zwingender Bestandteil des Hohlkammerprofils mindestens ein (eine zweite Profilkammer bildendes) Extrusionsprofil, insbesondere aus Metall, vorgesehen ist. Das mindestens eine Extrusionsprofil ist aufgrund seiner vergleichsweise hohen Stabilität innerhalb des Hohlkammerprofils jeweils das Element, das die Hauptlast aufnehmen kann. Eine durch mindestens ein weiteres Profil, insbesondere Blechprofil, das mit dem jeweiligen Extrusionsprofil verbunden ist, erzeugte weitere Profilkammer (erste Profilkammer), kann dadurch eine größere Querschnittsfläche als das jeweilige Extrusionsprofil aufweisen, ohne dass dies nennenswerte Auswirkungen auf die Gesamtstabilität des Hohlkammerprofils hätte.

Mit der Erkenntnis, dass es möglich ist, die nicht durch Extrusion erzeugte, insbesondere zumindest abschnittsweise von Blech gebildete erste Profilkammer einerseits mit einem größeren Querschnitt als die mindestens eine zweite Profilkammer zu versehen und andererseits dennoch in der ersten Profilkammer auf (Blech-)Stege zu verzichten, lassen sich mit geringem Material- und Arbeitsaufwand Hohlkammerprofile mit einem großen Gesamtquerschnitt herstellen, die trotzdem eine ausreichend hohe Stabilität haben.

Insbesondere hat die Kombination eines oder mehrerer Extrusionsprofile mit einem entsprechenden weiteren Profil, insbesondere Blechformteil, den Vorteil, dass die Anzahl der Schweißnähte oder -punkte gegenüber einem vergleichbaren, ausschließlich aus Blech gefertigten Profil reduziert wird. Dadurch ergibt sich auch ein geringerer Bauteilverzug und Richtaufwand. Der Bauteilverzug und Richtaufwand kann zusätzlich noch dadurch verringert werden, dass zum Fügen der Profile als Schweißverfahren das Laserhybridschweißen eingesetzt wird.

Indem zwingender Bestandteil des Hohlkammerprofils mindestens ein Extrusionsprofil ist, können gegenüber Hohlkammerprofilen, die ausschließlich aus Blech gefertigt sind, auch größere Wandstärken und/oder kleinere Radien realisiert werden.

Indem das Hohlkammerprofil außerdem mehrteilig ausgebildet ist, das heißt aus mindestens zwei Einzelprofilen besteht, können wie gesagt außerdem größere Hohlkammerprofile als nur mit der Anwendung eines Extrusionsverfahrens, insbesondere des Strangpressverfahrens, erzeugt werden.

Im Folgenden werden nun verschiedene Ausgestaltungen des Hohlkammerprofils für ein erfindungsgemäßes Schienenfahrzeug beschrieben, die auch Gegenstand der Unteransprüche sind.

Gemäß einer Ausgestaltung dieses Hohlkammerprofils wird die erste Profilkammer von einem Abschnitt des geschlossenen Extrusionsprofils sowie mindestens einem quer zur Längsrichtung offenen weiteren Profil gebildet. Bei Vorhandensein von mehr als einem Extrusionsprofil wird gemäß dieser Ausgestaltung die erste Profilkammer von einem Abschnitt eines ersten geschlossenen Extrusionsprofils und einem Abschnitt mindestens eines zweiten geschlossenen Extrusionsprofils sowie mindestens einem quer zur Längsrichtung offenen weiteren Profil gebildet. Dabei sind das jeweilige geschlossene Extrusionsprofil (bzw. jedes der geschlossenen Extrusionsprofile) und das mindestens eine weitere Profil stoffschlüssig miteinander verbunden (gefügt), bevorzugt miteinander verschweißt. Die Schweißverbindung ist insbesondere durch Laserhybridschweißen hergestellt.

Gemäß einer weiteren Ausgestaltung ist das jeweilige geschlossene Extrusionsprofil bzw. sind alle geschlossenen Extrusionsprofile des Hohlkammerprofils jeweils ein Metallprofil, insbesondere Strangpressprofil. Auch das mindestens eine weitere Profil, welches mit dem oder den Extrusionsprofilen gefügt ist, ist bevorzugt ein Metallprofil. Dabei handelt es sich insbesondere um ein Blech, vorzugsweise ein Blechformteil oder ein ebenes Blech. Bei einem Blechformteil handelt es sich im Sinne der Erfindung um ein aus einem Flachbandmaterial gebogenes Profil. Ein Beispiel für ein Blechformteil ist ein Abkantblech. Alternativ kann auch das weitere Profil ein Strangpressprofil aus Metall sein.

Gemäß noch einer Ausgestaltung des erfindungsgemäßen Hohlkammerprofils ist genau eine erste Profilkammer vorgesehen, wobei die Profilkammer insbesondere die einzige Profilkammer ist, die zumindest abschnittsweise von einem Blech gebildet bzw. begrenzt wird. Mit anderen Worten bilden die Bleche mit der Wand des Extrusionsprofils oder den Wänden der Extrusionsprofile nur einen einzigen Blechhohlraum. Dieser Hohlraum ist damit nicht durch Trennwände und insbesondere nicht durch ein Fachwerk unterteilt. Entsprechendes gilt insbesondere auch für das jeweilige Extrusionsprofil, welches ebenfalls nicht durch Trennwände und insbesondere nicht durch ein Fachwerk unterteilt ist. Das jeweilige Extrusionsprofil ist in diesem Fall somit ein Hohlprofil.

Gemäß wieder einer weiteren Ausgestaltung des erfindungsgemäßen Hohlkammerprofils ist genau ein weiteres Profil vorgesehen, wobei das weitere Profil genau eine erste Profilkammer zusammen mit dem Abschnitt des geschlossenen Extrusionsprofils bildet. Dabei ist das genau eine weitere Profil insbesondere ein einseitig offenes asymmetrisches Profil und wird vorzugsweise von einem Blechformteil gebildet. Alternativ zu einem Blechformteil kann das Profil auch von einem Strangpressprofil aus Metall gebildet sein. Mit einem einseitig offenen asymmetrischen Profil ist ein Profil gemeint, dessen Kontur in einem Schnitt quer zur Längsrichtung keine Symmetrie aufweist bzw. keine Symmetrieachsen hat. Das weitere Profil kann, in einem Schnitt quer zur Längsrichtung, mehrere gerade Seiten aufweisen, beispielsweise drei Seiten, wobei mindestens zwei der Seiten, vorzugsweise alle Seiten, nicht parallel zur irgendeiner anderen der Seiten verlaufen.

Auch bei dem mindestens einen Extrusionsprofil kann es sich um ein asymmetrisches Profil handeln, dessen Kontur, in einem Schnitt quer zur Längsrichtung, keine Symmetrie aufweist bzw. keine Symmetrieachsen hat. Auch das jeweilige Extrusionsprofil kann, in einem Schnitt quer zur Längsrichtung, mehrere gerade Seiten aufweisen, beispielsweise fünf gerade Seiten, von denen mindestens zwei Seiten, vorzugsweise mindestens drei Seiten, zu keiner der übrigen Seiten parallel verlaufen.

Gemäß noch einer Ausgestaltung des erfindungsgemäßen Hohlkammerprofils ist genau eine zweite Profilkammer, die von einem geschlossenen Extrusionsprofil gebildet wird, vorgesehen. Bei dem Hohlkammerprofil handelt es sich in diesem Fall also um ein Zweikammerprofil.

Gemäß einer alternativen Ausgestaltung kann vorgesehen sein, dass genau zwei zweite Profilkammern, die jeweils von einem geschlossenen Extrusionsprofil gebildet werden, sowie genau zwei weitere Profile vorgesehen sind, wobei die beiden weiteren Profile genau eine erste Profilkammer zusammen mit einem Abschnitt des einen (ersten) Extrusionsprofils und einem Abschnitt des weiteren (zweiten) Extrusionsprofils bilden. Insbesondere ist mindestens eines, vorzugsweise genau eines, der beiden weiteren Profile in diesem Fall ein Blechformteil. Außerdem kann mindestens eines, vorzugsweise genau eines, der beiden weiteren Profile ein ebenes Blech sein, Besonders bevorzugt sind in diesem Fall zwei weitere Profile, eines in Form eines Blechformteils und das andere in Form eines ebenen Blechs, vorgesehen, wobei jedes der weiteren Profile insbesondere das erste Extrusionsprofil mit dem zweiten Extrusionsprofil verbindet. Ein solches Hohlkammerprofil ist also ein Dreikammerprofil.

Bei allen vorangehend beschriebenen Varianten eines Hohlkammerprofils kann gemäß einer weiteren Ausgestaltung vorgesehen sein, dass, in einem Schnitt quer zur Längsrichtung, die Querschnittsfläche der ersten Profilkammer mindestens um den Faktor 1,2, bevorzugt mindestens um den Faktor 1,5, besonders bevorzugt mindestens um den Faktor 2,5, größer als die Querschnittsfläche der mindestens einen zweiten Profilkammer ist. Sind mehrere zweite Profilkammern vorgesehen, beispielsweise zwei zweite Profilkammern, ist die Querschnittsfläche der ersten Profilkammer gemäß dieser Ausgestaltung mindestens um den Faktor 1,2, bevorzugt mindestens um den Faktor 1,5, besonders bevorzugt mindestens um den Faktor 2,5, größer als jede einzelne der zweiten Profilkammern.

Gemäß noch einer weiteren Ausgestaltung des erfindungsgemäßen Hohlkammerprofils bilden, in einem Schnitt quer zur Längsrichtung, die gedachten geraden Verlängerungen der drei längsten geraden Seiten des Hohlkammerprofils ein Dreieck. Dabei werden insbesondere zwei Seiten (der drei längsten geraden Seiten) zumindest abschnittsweise von einem gemeinsamen Profil, vorzugsweise Blechformteil, gebildet. Insbesondere ist es denkbar, dass ein weiteres Profil, insbesondere Blechformteil, so geformt ist, dass zumindest eine der drei längsten geraden Seiten des Hohlkammerprofils vollständig und zumindest zwei der drei längsten geraden Seiten des Hohlkammerprofils abschnittsweise von diesem weiteren Profil gebildet werden. Alternativ ist es auch denkbar, insbesondere in dem Fall, dass zwei weitere Profile vorgesehen sind, zwei der drei längsten geraden Seiten des Hohlkammerprofils von dem einen der weiteren Profile abschnittsweise und die dritte der drei längsten geraden Seiten des Hohlkammerprofils von dem anderen der weiteren Profile abschnittsweise gebildet werden.

Gemäß einer Variante ist denkbar, dass es sich bei dem weiteren Profil um ein an zwei Stellen, d.h. zweifach, umgebogenes Blech handelt. Dabei ist das Blech an einer Stelle insbesondere um einen Winkel in einem Bereich von 110° bis 150°, bevorzugt in einem Bereich von 120° bis 140°, besonders bevorzugt in einem Bereich von 125° bis 135°, (gegenüber dem ebenen Ursprungszustand) gebogen.

Gemäß einer anderen Variante ist denkbar, dass es sich bei dem weiteren Profil um ein an nur einer Stelle, d.h. einfach, umgebogenes Blech handelt. Dabei ist das Blech an einer Stelle insbesondere um einen Winkel in einem Bereich von 60° bis 90°, bevorzugt in einem Bereich von 65° bis 85°, besonders bevorzugt in einem Bereich von 70° bis 80°, (gegenüber dem ebenen Ursprungszustand) gebogen.

Schließlich ist gemäß noch einer Ausgestaltung des erfindungsgemäßen Hohlkammerprofils vorgesehen, dass die erste Profilkammer und/oder die mindestens eine zweite Profilkammer an ihren beiden in Längsrichtung voneinander beabstandeten Enden jeweils mit einer Abdeckung luftdicht zugeschweißt sind. Wenn mehrere, insbesondere alle Profilkammern zugeschweißt sind, sind die in dieselbe Richtung weisenden zugeschweißten Enden benachbarter Profilkammern quer zur Längsrichtung nebeneinander (fluchtend) angeordnet. Dabei sind die in dieselbe Richtung weisenden bzw. quer zur Längsrichtung nebeneinander angeordneten Enden der Profilkammern insbesondere mit einer gemeinsamen Abdeckung luftdicht zugeschweißt. Alternativ ist es aber auch denkbar, dass jedes luftdicht verschlossene Profilkammerende jeweils mit einer eigenen Abdeckung luftdicht zugeschweißt ist. Zum einen kann in die Profilkammern keine Feuchtigkeit eindringen, da diese an ihren beiden Enden luftdicht und nicht wie im Stand der Technik mit lediglich punktgeschweißten Deckeln verschlossen sind. Insbesondere wenn ein solches Hohlkammerprofil im Außenbereich einer Wagenkastenstruktur des Schienenfahrzeugs den Witterungseinflüssen ausgesetzt ist, wird das Eindringen von Feuchtigkeit verhindert. Das Risiko von Korrosion wird dadurch vermindert und die Lebensdauer des gesamten Hohlkammerprofils erhöht. Dadurch wird auch langfristig eine hohe Stabilität der Wagenkastenstruktur gewährleistet.

Die zuvor hergeleitete und aufgezeigte Aufgabe wird bei einem Schienenfahrzeug mit einer Wagenkastenstruktur und einer Türöffnung, insbesondere einer Außentür, dadurch gelöst, dass die Wagenkastenstruktur als tragenden Bestandteil mindestens ein wie zuvor definiertes Hohlkammerprofil aufweist.

Das Hohlkammerprofil verläuft (im montierten bzw. angeschweißten Zustand) vorzugsweise parallel zur Längsrichtung der Wagenkastenstruktur (Richtung der größten horizontalen Erstreckung, d.h. Richtung zwischen bezogen auf die spätere Fahrtrichtung vorderem und hinterm Wagenkastenende). Insbesondere ist das Hohlkammerprofil über seine gesamte Breite mit der übrigen Wagenkastenstruktur verbunden, das heißt im montierten Zustand ist zumindest eine Profilkammerwand mehrerer Profilkammern, vorzugsweise aller Profilkammern, mit einem anderen tragenden Bestandteil der Wagenkastenstruktur verbunden. Besonders bevorzugt ist das Hohlkammerprofil vertikal (in Schwerkraftrichtung) unterhalb und/oder oberhalb einer Türöffnung, insbesondere einer Außentür, angeordnet.

Es gibt nun eine Vielzahl von Möglichkeiten, das erfindungsgemäße Schienenfahrzeug auszugestalten und weiterzubilden. Diesbezüglich sei einerseits verwiesen auf die dem Patentanspruch 1 nachgeordneten Patentansprüche, andererseits auf die Beschreibung von Ausführungsbeispielen in Verbindung mit der Zeichnung. In der Zeichnung zeigt:
- Fig. 1: ein erstes Ausführungsbeispiel eines erfindungsgemäßen Hohlkammerprofils,
- Fig. 2: ein zweites Ausführungsbeispiel eines erfindungsgemäßen Hohlkammerprofils,
- Fig. 3: ein drittes Ausführungsbeispiel eines erfindungsgemäßen Hohlkammerprofils und
- Fig. 4: eine schematische Darstellung einer Wagenkastenstruktur eines erfindungsgemäßes Schienenfahrzeugs mit einem Hohlkammerprofil.

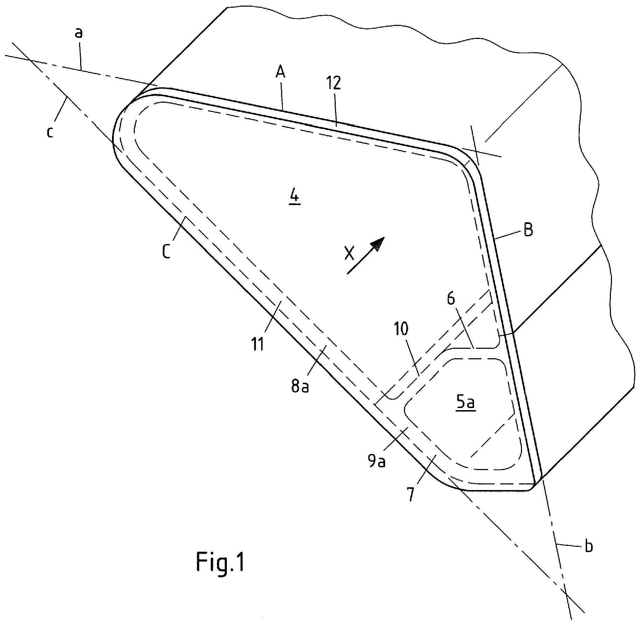

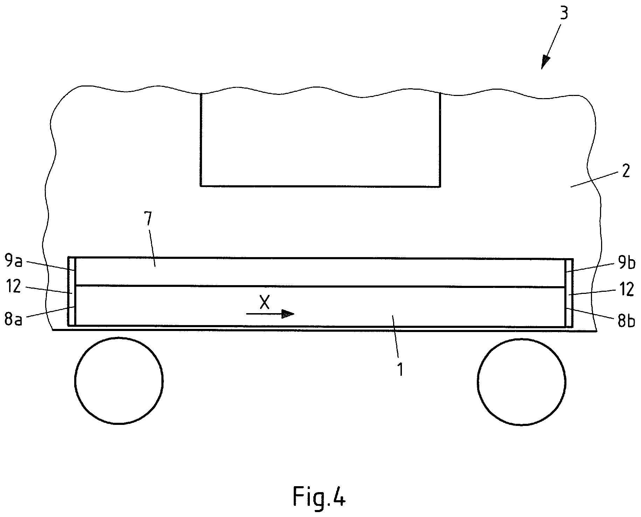

Die Figuren 1 bis 3 zeigen unterschiedliche Ausführungsbeispiele eines Hohlkammerprofils 1, die im Folgenden näher beschrieben werden sollen. Diese Hohlkammerprofile 1 können jeweils, wie Fig. 4 zeigt, als tragender Bestandteil einer Wagenkastenstruktur 2 eines Schienenfahrzeugs 1 verwendet werden.

Die in den Ausführungsbeispielen gezeigten Hohlkammerprofile 1 weisen alle eine erste sich in einer Längsrichtung X des Hohlkammerprofils 1 erstreckende, quer zur Längsrichtung X geschlossene Profilkammer 4 auf. Außerdem weist jedes der gezeigten Hohlkammerprofile 1 mindestens eine unmittelbar daran angrenzende zweite Profilkammer 5a bzw. 5b auf, die sich ebenfalls in Längsrichtung X des Hohlkammerprofils 1 erstreckt und quer zur Längsrichtung X geschlossen ist. Diese zweite Profilkammer 5a bzw. 5b ist jeweils durch einen sich in Längsrichtung X erstreckenden, das heißt einen parallel zur ersten und zweiten Profilkammer verlaufenden Steg 6, bei dem es sich um eine in Längsrichtung X durchgehend (unterbrechungsfrei) geformte Trennwand handelt, von der ersten Profilkammer 4 getrennt. Die jeweilige zweite Profilkammer 5a bzw. 5b wird dabei von einem Extrusionsprofil 7 bzw. 7', welches quer zur Längsrichtung geschlossen ist, das heißt einem einstückigen extrudierten Profil, gebildet.

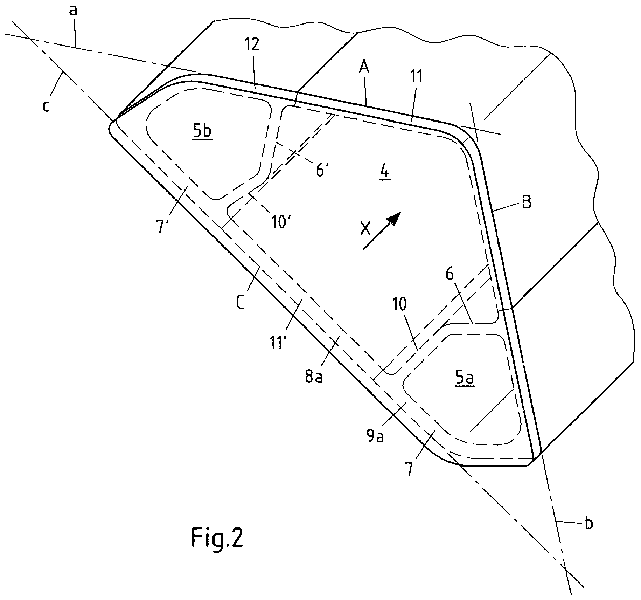

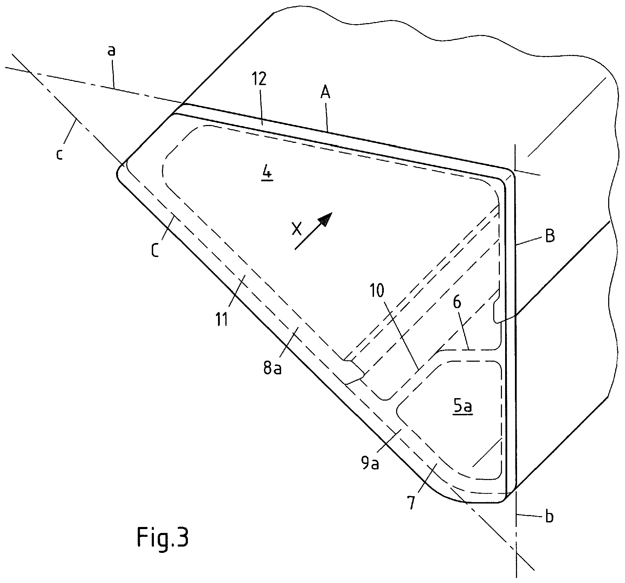

Dabei weist das Hohlkammerprofil 1 gemäß dem Ausführungsbeispiel in Fig. 1 und das Hohlkammerprofil 1 gemäß dem Ausführungsbeispiel in Fig. 3 jeweils genau eine (d.h. nur eine) zweite Profilkammer 5a und entsprechend ein einzelnes Extrusionsprofil 7 auf, wohingegen das Hohlkammerprofil 1 in dem Ausführungsbeispiel in Fig. 2 zwei zweite Profilkammern 5a und 5b bzw. zwei Extrusionsprofile 7 und 7' aufweist.

Ferner haben alle gezeigten Hohlkammerprofile 1 gemein, dass die erste Profilkammer 4 an ihren beiden Enden 8a und 8b und die jeweils zweite Profilkammer 5a bzw. 5b an ihren beiden Enden 9a und 9b mit einer Abdeckung 12 luftdicht zugeschweißt sind, wobei hier eine gemeinsame erste Abdeckung 12 beide nebeneinander liegenden Enden 8a und 9a und eine gemeinsame weitere Abdeckung 12 beide nebeneinander liegenden Enden 8b und 9b luftdicht verschließt.

Bei den Hohlkammerprofilen in den Figuren 1 und 3 wird die erste Profilkammer 4 von einem Abschnitt 10 des Extrusionsprofils 7 sowie einem quer zur Längsrichtung X offenen weiteren Profil 11 gebildet. Bei dem Hohlkammerprofil 1 in Fig. 2 wird die erste Profilkammer 4 von einem Abschnitt 10 eines ersten Extrusionsprofils 7 und einem Abschnitt 10' eines zweiten Extrusionsprofils 7' sowie zwei quer zur Längsrichtung X offenen weiteren Profilen 11 und 11' gebildet. Das jeweilige Extrusionsprofil 7 bzw. 7' und das jeweilige weitere Profil 11 bzw. 11' sind miteinander stoffschlüssig durch verschweißen mittels Laserhybridschweißen verbunden.

Bei allen Profilen handelt es sich um Metallprofile, wobei es sich bei den Extrusionsprofilen 5a und 5b jeweils um ein Strangpressprofil handelt. Die weiteren Profile 11 und 11' sind jeweils aus einem Blech (Fig. 1 und 2) oder ebenfalls einem Strangpressprofil (Fig. 3) geformt.

In Fig. 1 handelt es sich bei dem weiteren Profil 11 um ein an zwei Stellen, d.h. zweifach, umgebogenes Blech (Abkantblech). Dabei ist das Blech an einer Stelle insbesondere um einen Winkel in einem Bereich von 110° bis 150°, bevorzugt in einem Bereich von 120° bis 140°, besonders bevorzugt in einem Bereich von 125° bis 135°, (gegenüber dem ebenen Ursprungszustand) gebogen.

Bei dem Profil 11 in Fig. 2 handelt es sich um ein an nur einer Stelle, d.h. einfach, umgebogenes Blech. Dabei ist das Blech an einer Stelle insbesondere um einen Winkel in einem Bereich von 60° bis 90°, bevorzugt in einem Bereich von 65° bis 85°, besonders bevorzugt in einem Bereich von 70° bis 80°, (gegenüber dem ebenen Ursprungszustand) gebogen.

Bei dem Profil 11' in Fig. 2 handelt es sich um ein ebenes (nicht umgebogenes) Blech.

In den Ausführungsbeispielen in den Figuren 1 und 2 ist die erste Profilkammer 4 die einzige Profilkammer, die zumindest abschnittsweise von Blech gebildet bzw. begrenzt ist.

Bei den Ausführungsbeispielen in den Figuren 1 und 3 ist genau ein weiteres Profil 11 vorgesehen, wobei das weitere Profil 11 genau eine Profilkammer 4 zusammen mit dem Abschnitt 10 des Extrusionsprofils 7 bildet. Das genau eine weitere Profil 11 ist ein einseitig offenes asymmetrisches Profil und wie beschrieben von einem Blechumformteil (Fig. 1) oder Strangpressprofil aus Metall (Fig. 3) gebildet.

Bei dem Ausführungsbeispiel in Fig. 2 bilden die beiden weiteren Profile 11 und 11' zusammen mit den Abschnitten 10 und 10' der beiden Extrusionsprofile 7 und 7' ebenfalls genau eine erste Profilkammer 4. Diese ist zu beiden Seiten von je einer zweiten Profilkammer 5a und 5b begrenzt, die aus einem Extrusionsprofil (Strangpressprofil) besteht.

Wie bei Vergleich der Figuren 1 bis 3 deutlich zu erkennen ist, ist, in einem Schnitt quer zur Längsrichtung X, die Querschnittsfläche der ersten Profilkammer 4 um ein mehrfaches größer als die Querschnittsfläche jeder zweiten Profilkammer 5a bzw. 5b. Bei den Figuren 1 und 3 ist die Querschnittsfläche der ersten Profilkammer 4 beispielsweise mehr als viermal so groß wie die Querschnittsfläche der zweiten Profilkammer 5a. Bei dem Ausführungsbeispiel in Fig. 2 ist die Querschnittsfläche der ersten Profilkammer 4 mehr als dreimal so groß wie die Querschnittsfläche jeder einzelnen zweiten Profilkammer 5a und 5b.

Schließlich ist bei Vergleich der Figuren 1 bis 3 ebenfalls deutlich erkennbar, dass, in einem Schnitt quer zur Längsrichtung X, die gedachten geraden Verlängerungen (Projektionsgeraden) a, b, c der drei längsten geraden Seiten A, B, C des Hohlkammerprofils 1 ein Dreieck bilden, wobei insbesondere zwei Seiten A und B zumindest abschnittsweise von einem gemeinsamen Profil 11 gebildet werden. Dabei verläuft keine der drei längsten geraden Seiten A, B und C parallel zu irgendeiner anderen der Seiten des Hohlkammerprofils 1. Entsprechendes gilt auch für alle anderen Seiten des Hohlkammerprofils 1, von denen keine parallel zu irgendeiner anderen der Seiten des Hohlkammerprofils 1 verläuft.

Schließlich ist in Fig. 4 schematisch eine Wagenkastenstruktur 2 eines Schienenfahrzeugs 3, beispielsweise eines Passagierwagens, dargestellt. Die Wagenkastenstruktur 2 erstreckt sich in einer Längsrichtung X' und weist an ihrer dem Betrachter zugewandten Seite im unteren Bereich ein Hohlkammerprofil 1 auf, wie es zuvor anhand der Figuren 1 bis 3 beschrieben wurde. Dieses Hohlkammerprofil 1, welches bezogen auf seine Längsrichtung X an beiden Seiten durch eine Abdeckung 12 luftdicht zugeschweißt sein kann, dient als Verstärkung der Wagenkastenstruktur 2, hier im Bereich vertikal unterhalb einer Türöffnung 13.

## Patentansprüche

1. Schienenfahrzeug (3) mit einer Wagenkastenstruktur (2) und einer Türöffnung (13), insbesondere einer Außentür, wobei die Wagenkastenstruktur (2) als tragenden Bestandteil mindestens ein Hohlkammerprofil (1)
- mit einer ersten sich in einer Längsrichtung (X) des Hohlkammerprofils (1) erstreckenden, quer zur Längsrichtung (X) geschlossenen Profilkammer (4) und
- mit mindestens einer zweiten sich in Längsrichtung (X) des Hohlkammerprofils (1) erstreckenden, quer zur Längsrichtung (X) geschlossenen Profilkammer (5a,5b),
aufweist,
- wobei das Hohlkammerprofil (1) parallel zur Längsrichtung (X') der Wagenkastenstruktur (2) verläuft,
- wobei das Hohlkammerprofil (1) vertikal unterhalb und/oder oberhalb der Türöffnung (13) angeordnet ist,
- wobei die mindestens eine zweite Profilkammer (5a,5b) von einem quer zur Längsrichtung (X) geschlossenen Extrusionsprofil (7,7') gebildet wird, und
- wobei, in einem Schnitt quer zur Längsrichtung (X), die Querschnittsfläche der ersten Profilkammer (4) größer als die Querschnittsfläche der mindestens einen zweiten Profilkammer (5a,5b) ist,
**dadurch gekennzeichnet, dass** die erste Profilkammer (4) von
- einem Abschnitt (10) des geschlossenen Extrusionsprofils (7) oder
- einem Abschnitt (10) eines ersten geschlossenen Extrusionsprofils (7) und einem Abschnitt (10') mindestens eines zweiten geschlossenen Extrusionsprofils (7')
sowie mindestens einem quer zur Längsrichtung (X) offenen weiteren Profil (11,11') gebildet wird, wobei das jeweilige geschlossene Extrusionsprofil (7,7') und das mindestens eine weitere Profil (11,11') stoffschlüssig miteinander verbunden, bevorzugt miteinander verschweißt, sind.

2. Schienenfahrzeug (3) nach Anspruch 1, **dadurch gekennzeichnet, dass** das jeweilige geschlossene Extrusionsprofil (7,7') und das mindestens eine weitere Profil (11,11') miteinander verschweißt sind.

3. Schienenfahrzeug (3) nach Anspruch 1 oder 2, **dadurch gekennzeichnet, dass** das jeweilige geschlossene Extrusionsprofil (7,7') ein Metallprofil, insbesondere Strangpressprofil, ist.

4. Schienenfahrzeug (3) nach einem der Ansprüche 1 bis 3, **dadurch gekennzeichnet, dass** das mindestens eine weitere Profil (11,11') ein Metallprofil, insbesondere ein Blech, vorzugsweise ein Blechformteil oder ebenes Blech, oder ein Strangpressprofil ist.

5. Schienenfahrzeug (3) nach einem der Ansprüche 1 bis 4, **dadurch gekennzeichnet, dass** genau eine erste Profilkammer (4) vorgesehen ist, wobei die Profilkammer (4) insbesondere die einzige Profilkammer (4), die zumindest abschnittsweise von einem Blech gebildet wird, ist.

6. Schienenfahrzeug (3) nach einem der Ansprüche 1 bis 5, **dadurch gekennzeichnet, dass** genau ein weiteres Profil (11) vorgesehen ist, wobei das weitere Profil (11) genau eine erste Profilkammer (4) zusammen mit dem Abschnitt (10) des geschlossenen Extrusionsprofils (7) bildet.

7. Schienenfahrzeug (3) nach Anspruch 6, **dadurch gekennzeichnet, dass** das genau eine weitere Profil (11) ein einseitig offenes asymmetrisches Profil ist und insbesondere von einem Blechformteil oder einem Strangpressprofil aus Metall gebildet wird.

8. Schienenfahrzeug (3) nach Anspruch 6 oder 7, **dadurch gekennzeichnet, dass** genau eine zweite Profilkammer (5a), die von einem geschlossenen Extrusionsprofil (7) gebildet wird, vorgesehen ist.

9. Schienenfahrzeug (3) nach einem der Ansprüche 1 bis 5, **dadurch gekennzeichnet, dass** genau zwei zweite Profilkammern (5a,5b), die jeweils von einem geschlossenen Extrusionsprofil (7,7') gebildet werden, sowie genau zwei weitere Profile (11,11') vorgesehen sind, wobei die beiden weiteren Profile (11,11') genau eine erste Profilkammer (4) zusammen mit einem Abschnitt (10) des einen Extrusionsprofils (7) und einem Abschnitt (10') des weiteren Extrusionsprofils (7') bilden.

10. Schienenfahrzeug (3) nach Anspruch 9, **dadurch gekennzeichnet, dass** mindestens eines der beiden weiteren Profile (11,11') ein Blechformteil und/oder mindestens eines der beiden weiteren Profile (11,11') ein ebenes Blech ist.

11. Schienenfahrzeug (3) nach einem der vorangehenden Ansprüche, **dadurch gekennzeichnet, dass**, in einem Schnitt quer zur Längsrichtung (X), die Querschnittsfläche der ersten Profilkammer (4) mindestens um den Faktor 1,2, bevorzugt mindestens um den Faktor 1,5, besonders bevorzugt mindestens um den Faktor 2,5, größer als die Querschnittsfläche der mindestens einen zweiten Profilkammer (5a,5b) ist.

12. Schienenfahrzeug (3) nach einem der vorangehenden Ansprüche, **dadurch gekennzeichnet, dass**, in einem Schnitt quer zur Längsrichtung (X), die gedachten geraden Verlängerungen (a,b,c) der drei längsten geraden Seiten (A,B,C) des Hohlkammerprofils (1) ein Dreieck bilden, wobei insbesondere zwei Seiten (A,B) zumindest abschnittsweise von einem gemeinsamen Profil (11), vorzugsweise einem Blechformteil, gebildet werden.

13. Schienenfahrzeug (3) nach einem der vorangehenden Ansprüche, **dadurch gekennzeichnet, dass** die erste Profilkammer (4) und/oder die mindestens eine zweite Profilkammer (5a,5b) an ihren beiden in Längsrichtung (X) voneinander beabstandeten Enden (8a,8b,9a,9b) jeweils mit einer Abdeckung (12) luftdicht zugeschweißt sind.

14. Schienenfahrzeug (3) nach einem der Ansprüche 1 bis 13, **dadurch gekennzeichnet, dass** das Hohlkammerprofil (1) über seine gesamte Breite mit der übrigen Wagenkastenstruktur (2) verbunden ist.

## Claims

1. Railway vehicle (3) with a car body structure (2) and a door opening (13), in particular an outer door, wherein the car body structure (2) comprises as load-bearing component at least one hollow chamber profile (1)
- with a first profile chamber (4) extending in a longitudinal direction (X) of the hollow chamber profile (1) and closed transversely to the longitudinal direction (X), and
- with at least one second profile chamber (5a, 5b) extending in the longitudinal direction (X) of the hollow chamber profile (1) and closed transversely to the longitudinal direction (X),
- wherein the hollow chamber profile (1) runs parallel to the longitudinal direction (X') of the car body structure (2),
- wherein the hollow chamber profile (1) is arranged vertically below and/or above the door opening (13)
- wherein the at least one second profile chamber (5a, 5b) is formed by an extrusion profile (7, 7') closed transversely to the longitudinal direction (X), and
- wherein, in a section transverse to the longitudinal direction (X), the cross-sectional area of the first profile chamber (4) is larger than the cross-sectional area of the at least one second profile chamber (5a, 5b),
**characterised in that** the first profile chamber (4) is formed by
- a section (10) of the closed extrusion profile (7), or
- a portion (10) of a first closed extrusion profile (7) and a portion (10') of at least one second closed extrusion profile (7')
as well as at least one further profile (11, 11') open transversely to the longitudinal direction (X), the respective closed extrusion profile (7, 7') and the at least one further profile (11, 11') being connected, preferably welded, to one another with a material bond.

2. Rail vehicle (3) according to claim 1, **characterised in that** the respective closed extrusion profile (7, 7') and the at least one further profile (11, 11') are welded together.

3. Rail vehicle (3) according to claim 1 or 2, **characterized in that** the respective closed extrusion profile (7, 7') is a metal profile, in particular an extruded profile.

4. Rail vehicle (3) according to any one of claims 1 to 3, **characterized in that** the at least one further profile (11, 11') is a metal profile, in particular a sheet metal, preferably a sheet metal shaped part or flat sheet, or an extruded profile.

5. Rail vehicle (3) according to any one of claims 1 to 4, **characterized in that** exactly one first profile chamber (4) is provided, the profile chamber (4) being in particular the only profile chamber (4) which is formed at least in sections by a sheet metal.

6. Rail vehicle (3) according to one of claims 1 to 5, **characterised in that** exactly one further profile (11) is provided, the further profile (11) forming exactly a first profile chamber (4) together with the section (10) of the closed extrusion profile (7).

7. Rail vehicle (3) according to claim 6, **characterized in that** the exactly one further profile (11) is an asymmetrical profile open on one side and is formed in particular by a sheet metal shaped part or an extruded profile of metal.

8. Rail vehicle (3) according to claim 6 or 7, **characterized in that** exactly a second profile chamber (5a) formed by a closed extrusion profile (7) is provided.

9. Rail vehicle (3) according to any one of claims 1 to 5, **characterized in that** exactly two second profile chambers (5a, 5b), each formed by a closed extrusion profile (7, 7'), and exactly two further profiles (11, 11') are provided, the two further profiles (11, 11') forming exactly one first profile chamber (4) together with a section (10) of the one extrusion profile (7) and a section (10') of the further extrusion profile (7').

10. Rail vehicle (3) according to claim 9, **characterized in that** at least one of the two further profiles (11, 11') is a sheet metal shaped part and/or at least one of the two further profiles (11, 11') is a flat sheet metal.

11. Rail vehicle (3) according to one of the preceding claims, **characterized in that**, in a section transverse to the longitudinal direction (X), the cross-sectional area of the first profile chamber (4) is at least by a factor of 1.2, preferably at least by a factor of 1.5, particularly preferably at least by a factor of 2.5, larger than the cross-sectional area of the at least one second profile chamber (5a, 5b).

12. Rail vehicle (3) according to one of the preceding claims, **characterized in that**, in a section transverse to the longitudinal direction (X), the imaginary straight extensions (a,b,c) of the three longest straight sides (A,B,C) of the hollow section (1) form a triangle, in particular two sides (A,B) being formed at least in sections by a common profile (11), preferably a sheet metal shaped part.

13. Rail vehicle (3) according to one of the preceding claims, **characterized in that** the first profile chamber (4) and/or the at least one second profile chamber (5a, 5b) are each welded to a cover (12) in an airtight manner at their two ends (8a, 8b, 9a, 9b) spaced apart from each other in the longitudinal direction (X).

14. Rail vehicle (3) according to one of claims 1 to 13, **characterised in that** the hollow chamber profile (1) is connected over its entire width to the rest of the car body structure (2).

## Revendications

1. Véhicule ferroviaire (3) avec une structure de châssis de wagon (2) et une ouverture de porte (13), plus particulièrement une porte extérieure, la structure de châssis de wagon (2) comprenant, en tant que composant porteur, au moins un profilé à chambres creuses (1)
- avec une première chambre de profilé (4) s'étendant dans une direction longitudinale (X) du profilé à chambres creuses (1), fermée transversalement par rapport à la direction longitudinale (X) et
- avec au moins une chambre de profilé (5a, 5b) s'étendant dans une direction longitudinale (X) du profilé à chambres creuses (1), fermée transversalement par rapport à la direction longitudinale (X)
- le profilé à chambres creuses (1) s'étendant parallèlement à la direction longitudinale (X') de la structure de châssis de wagon (2),
- le profilé à chambres creuses (1) étant disposé verticalement en dessous et/ou au-dessus de l'ouverture de porte (13),
- l'au moins une deuxième chambre de profilé (5a, 5b) étant constituée d'un profilé d'extrusion (7, 7') fermé transversalement par rapport à la direction longitudinale et
- moyennant quoi, en coupe transversalement à la direction longitudinale (X), la surface de section transversale de la première chambre de profilé (4) est supérieure à la surface de section transversale de l'au moins une deuxième chambre de profilé (5a, 5b),
**caractérisé en ce que** la première chambre de profilé (4) est constituée
- d'une portion (10) du profilé d'extrusion fermé (7) ou
- d'une portion (10) d'un premier profilé d'extrusion fermé (7) et d'une portion (10') d'au moins un deuxième profilé d'extrusion fermé (7'),
ainsi que d'au moins un profilé supplémentaire (11, 11') ouvert transversalement par rapport à la direction longitudinale (X), le profilé d'extrusion fermé (7, 7') correspondant et l'au moins un profilé supplémentaire (11, 11') étant reliés entre eux par liaison de matière, de préférence soudés entre eux.

2. Véhicule ferroviaire (3) selon la revendication 1, **caractérisé en ce que** le profilé d'extrusion fermé (7, 7') correspondant et l'au moins un profilé supplémentaire (11, 11') sont soudés entre eux.

3. Véhicule ferroviaire (3) selon la revendication 1 ou 2, **caractérisé en ce que** le profilé d'extrusion fermé (7, 7') correspondant est un profilé métallique, plus particulièrement un profilé extrudé.

4. Véhicule ferroviaire (3) selon l'une des revendications 1 à 3, **caractérisé en ce que** l'au moins un profilé supplémentaire (11, 11') est un profilé métallique, plus particulièrement une tôle, de préférence une pièce formée en tôle ou une tôle plate ou un profilé extrudé.

5. Véhicule ferroviaire (3) selon l'une des revendications 1 à 4, **caractérisé en ce qu'**exactement une chambre de profilé (4) est prévue, la chambre de profilé (4) étant plus particulièrement la seule chambre de profilé (4) qui est constituée, au moins à certains endroits, d'une tôle.

6. Véhicule ferroviaire (3) selon l'une des revendications 1 à 5, **caractérisé en ce qu'**exactement un profilé supplémentaire (11) est prévu, le profilé supplémentaire (11) constituant exactement une première chambre de profilé (4) conjointement avec la portion (10) du profilé d'extrusion fermé (7).

7. Véhicule ferroviaire (3) selon la revendication 6, **caractérisé en ce que** l'exactement un profilé supplémentaire (11) est un profilé asymétrique ouvert d'un côté et plus particulièrement est constitué d'une pièce formée en tôle ou d'un profilé extrudé en métal.

8. Véhicule ferroviaire (3) selon la revendication 6 ou 7, **caractérisé en ce qu'**exactement une deuxième chambre de profilé (5a) est prévue, qui est constituée d'un profilé d'extrusion fermé (7).

9. Véhicule ferroviaire (3) selon l'une des revendications 1 à 5, **caractérisé en ce qu'**exactement deux deuxièmes chambres de profilé (5a, 5b) sont prévues, qui sont constituées chacune d'un profilé d'extrusion fermé (7, 7'), et exactement deux profilés supplémentaires (11, 11') sont prévus, les deux profilés supplémentaires (11, 11') constituant exactement une première chambre de profilé (4) conjointement avec une portion (10) d'un profilé d'extrusion (7) et une portion (10') de l'autre profilé d'extrusion (7').

10. Véhicule ferroviaire (3) selon la revendication 9, **caractérisé en ce qu'**au moins un des deux profilés supplémentaires (11, 11') est une pièce formée en tôle et/ou au moins un des deux profilés supplémentaires (11, 11') est une tôle plate.

11. Véhicule ferroviaire (3) selon l'une des revendications précédentes, **caractérisé en ce que**, dans une coupe transversalement à la direction longitudinale (X), la surface de section transversale de la première chambre de profilé (4) est supérieure au moins d'un facteur 1,2, de préférence au moins du facteur 1,5, plus particulièrement de préférence au moins du facteur 2,5, à la surface de section transversale de l'au moins une deuxième chambre de profilé (5a, 5b).

12. Véhicule ferroviaire (3) selon l'une des revendications précédentes, **caractérisé en ce que**, dans une coupe transversalement à la direction longitudinale (X), les prolongements droits imaginaires (a, b, c) des trois côtés droits (A, B, C) les plus longs du profilé à chambres creuses (1) forment un triangle, plus particulièrement deux côtés (A, B) étant constitués, au moins à certains endroits, d'un profilé commun (11), de préférence d'une pièce formée en tôle.

13. Véhicule ferroviaire (3) selon l'une des revendications précédentes, **caractérisé en ce que** la première chambre de profilé (4) et/ou l'au moins une deuxième chambre de profilé (5a, 5b) sont fermées chacune, par soudure de manière étanche à l'air, au niveau de leurs deux extrémités (8a, 8b, 9a, 9b) distantes entre elles dans la direction longitudinale (X), avec un couvercle (12).

14. Véhicule ferroviaire (3) selon l'une des revendications 1 à 13, **caractérisé en ce que** le profilé à chambres creuses (1) est relié, sur toute sa largeur, avec le reste de la structure de châssis de wagon (2).
